# FASCICULE DE BREVET EUROPEEN

(11) **EP 3 212 692 B1**
(45) Date de publication et mention de la délivrance du brevet: **27.04.2022**
(21) Numéro de dépôt: 15797131.8
(22) Date de dépôt: 28.10.2015
(51) Int. Cl.: C08G 63/672, C08K 3/22, C08G 63/84, C08G 63/86

(54) **PROCÉDÉ DE FABRICATION D'UN POLYESTER CONTENANT AU MOINS UN MOTIF 1,4 : 3, 6-DIANHYDROHEXITOL À COLORATION AMÉLIORÉE**
VERFAHREN ZUR HERSTELLUNG EINES POLYESTERS MIT MINDESTENS EINER 1,4:3,6-DIANHYDROHEXITOL-EINHEIT MIT VERBESSERTER FÄRBUNG
METHOD FOR PRODUCING A POLYESTER CONTAINING AT LEAST ONE 1,4:3,6-DIANHYDROHEXITOL UNIT WITH IMPROVED COLOURING

(30) Priorité: 29.10.2014 FR 1460403
(43) Date de publication de la demande: 06.09.2017
(73) Titulaire: Roquette Frères, 62136 Lestrem (FR)
(72) Inventeur: JACQUEL, Nicolas, F-59130 Lambersart (FR); SAINT-LOUP, René, F-59160 Lomme (FR); FENOUILLOT-RIMLINGER, Françoise, F-38080 l'Isle d'Abeau (FR); PASCAULT, Jean-Pierre, F-69009 Villeurbanne (FR); ROUSSEAU, Alain, F-69800 Saint-Priest (FR)
(74) Mandataire: Plasseraud IP
(86) Numéro de dépôt international: PCT/FR2015/052901
(87) Numéro de publication internationale: WO 2016/066956

(56) Documents cités:
- WO-A1-2006/032022
- FR-A1- 2 888 851
- JP-A- 2013 166 874
- US-A- 6 020 421

## Description

### Domaine de l'invention

La présente invention se rapporte à un procédé de fabrication de polyester comprenant au moins un motif 1,4 : 3,6-dianhydrohexitol, à l'aide d'un système catalytique permettant de réduire la coloration du polyester ainsi formé. L'invention a également pour objet une composition de polyester comprenant ledit système catalytique.

### Arrière-plan technologique de l'invention

Du fait de leurs nombreux avantages, les matières plastiques sont devenues incontournables pour la fabrication en série d'objets. En effet, du fait de leur caractère thermoplastique, on peut fabriquer à cadence élevée toute sorte d'objets à partir de ces matières plastiques.

Certains polyesters aromatiques sont thermoplastiques et ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de récipients, d'emballages ou encore de fibres textiles. Le PET peut être un polymère transparent et être ainsi utile à la fabrication d'objets dont les propriétés optiques sont importantes. Il peut également être opaque et blanc dans le cas où ce polymère est semi-cristallin, si la cristallinité et la taille des cristallites sont importantes. Il est donc nécessaire dans les deux cas que le PET présente une coloration la plus faible possible.

Par « motifs monomériques », on entend selon l'invention des motifs compris dans le polyester qui peuvent être obtenus après polymérisation d'un monomère. En ce qui concerne les motifs éthylène glycol et acide téréphtalique compris dans le PET, ils peuvent soit être obtenus par réaction d'estérification d'éthylène glycol et d'acide téréphtalique, soit par une réaction de trans-estérification d'éthylène glycol et d'ester d'acide téréphtalique.

Le développement de polyesters issus de ressources biologiques renouvelables à court terme est devenu un impératif écologique et économique, face à l'épuisement et à la montée des prix des ressources fossiles telles que le pétrole. L'une des préoccupations importantes aujourd'hui dans le domaine des polyesters est donc de fournir des polyesters d'origine naturelle (biosourcés). Ceci est particulièrement vrai pour les polyesters comprenant des motifs diol aliphatique et acide aromatique. Ainsi, des groupes comme Danone ou Coca-Cola commercialisent aujourd'hui des bouteilles de boisson en PET partiellement biosourcé, ce PET étant fabriqué à partir d'éthylène glycol biosourcé. Un inconvénient de ce PET est qu'il n'est que partiellement biosourcé, puisque l'acide téréphtalique est quant à lui généralement issu de ressources fossiles. Toutefois, des procédés de synthèse d'acide téréphtalique biosourcé et d'ester d'acide téréphtalique biosourcé ont été récemment développés, ce qui permet la fabrication de PET totalement biosourcé. On peut ainsi citer la demande WO 2013/034743 A1 qui décrit notamment de tels PET.

Toutefois, pour certaines applications ou dans certaines conditions d'utilisation, ces polyesters ne présentent pas toutes les propriétés requises. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques, notamment lorsque le PETg est amorphe.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon. Ces polyesters modifiés sont notamment utiles pour la fabrication de bouteilles, de films, de feuilles épaisses, de fibres ou d'articles nécessitant des propriétés optiques élevées. Cependant, un problème de ces PEIT est qu'ils peuvent présenter une coloration généralement importante, généralement supérieure à celles des PETg ou des PET, et ceci même lorsque les quantités d'isosorbide utilisées dans la fabrication du polyester sont très faibles.

En vue de résoudre ce problème de coloration élevée, un procédé de préparation de PEIT par polymérisation en fondu a déjà été décrit dans la demande de brevet US 2006/0173154 A1. Ce procédé comprend une première étape d'estérification et une seconde étape de polycondensation, dans lequel est utilisé lors de l'étape d'estérification un antioxydant primaire ainsi qu'un antioxydant secondaire lors de l'étape de polycondensation. Dans les exemples, un système catalytique comprenant des catalyseurs à base de germanium et à base de cobalt sont utilisés.

Dans les demandes de brevet WO2013/183873 et WO2013/183874 sont décrits des procédés de fabrication de polyesters comprenant une étape d'estérification de monomères comprenant de l'acide téréphtalique, du CHDM, de l'isosorbide et composé diol additionnel en présence d'un catalyseur d'estérification qui est un composé à base de zinc. Ce catalyseur permet d'améliorer la cinétique de réaction de polymérisation et/ou d'augmenter la viscosité du polymère obtenu à partir de ce procédé. Dans les procédés qui sont exemplifiés dans ces deux demandes, sont introduits, lors de l'étape de polycondensation, un catalyseur à base de germanium.

La Demanderesse a pu constater en réalisant des études sur les catalyseurs de polymérisation pour la fabrication de polyesters contenant des motifs 1,4 : 3,6-dianhydrohexitol (voir exemples ci-après), que les polyesters obtenus à partir de ces procédés ne sont pas pleinement satisfaisants, notamment en termes de coloration. Cette coloration peut être soit très jaune comme c'est le cas lorsque l'on utilise exclusivement un catalyseur de polycondensation à base de germanium, ou gris lorsque l'on utilise un système catalytique comprenant des catalyseurs à base de germanium et à base de cobalt. Il reste donc un besoin de trouver de nouveaux procédés de fabrication de polyesters contenant des motifs 1,4 : 3,6-dianhydrohexitol dont la coloration est améliorée.

### Résumé de l'invention

L'invention a ainsi pour objet un procédé de fabrication d'un polyester contenant au moins un motif 1,4 : 3,6-dianhydrohexitol comprenant au moins :
- une étape d'introduction dans un réacteur de monomères comprenant au moins un monomère (A) qui est un diacide ou un diester et au moins un monomère (B) qui est un 1,4 : 3,6-dianhydrohexitol ;
- une étape d'introduction dans le réacteur d'un système catalytique comprenant soit un catalyseur comprenant l'élément germanium et un catalyseur comprenant l'élément aluminium, soit un catalyseur comprenant les éléments germanium et aluminium ou soit un mélange de ces catalyseurs ;

- une étape de polymérisation desdits monomères pour former le polyester ;
- une étape de récupération d'une composition de polyester comprenant le polyester et le système catalytique.

Des systèmes catalytiques associant un catalyseur à base de germanium avec un catalyseur à base d'aluminium ont déjà été décrits pour la fabrication de polyesters de type PET dans la demande WO 2004/048437. Dans cette demande sont comparées les couleurs d'un polyester obtenu à partir d'un catalyseur à base de germanium avec un polyester obtenu à partir d'un système catalytique comprenant un catalyseur à base de germanium, un catalyseur à base d'aluminium et un catalyseur à base de lithium. Si le temps de polycondensation est diminué de manière très importante, la coloration du polyester n'est pas améliorée. Au contraire, le polyester obtenu est même plus jaune ou, dans le cas où un catalyseur à base de cobalt est ajouté dans le système catalytique, plus sombre.

De manière surprenante, comme démontré dans les exemples, le polyester récupéré à l'issue du procédé selon l'invention présente une coloration plus faible que celle d'un polyester obtenu à partir d'un procédé similaire qui diffère dans le système catalytique utilisé.

### Description détaillée de l'invention

L'invention porte sur un procédé de fabrication d'un polyester contenant au moins un motif 1,4 : 3,6-dianhydrohexitol.

Ce procédé comprend une étape d'introduction dans un réacteur de monomères. Les monomères introduits dans le réacteur comprennent au moins un monomère (A) qui est un diacide ou un diester et au moins un monomère (B) qui est un 1,4 : 3,6-dianhydrohexitol.

Par diacide ou diester, on entend selon l'invention un diacide carboxylique ou diester d'acide carboxylique.

Selon un mode de réalisation préféré, le monomère (A) est un diacide ou un mélange de diacides. Certains diacides, tels que l'acide phtalique ou l'acide maléique, peuvent également se présenter sous forme anhydride.

Le diacide peut être un diacide aromatique, un diacide aliphatique ou un mélange de ces diacides.

De préférence, le diacide est aromatique. Il peut être choisi parmi l'acide téréphtalique, l'acide isophtalique, l'acide phtalique, l'acide 2,6-naphtalène dicarboxylique, l'acide 1,4-naphtalène dicarboxylique, un acide furanedicarboxylique, et un mélange de ces diacides. De préférence, l'acide aromatique est l'acide téréphtalique.Le monomère (A) peut également être un diacide aliphatique ou un mélange de ces diacides. Le diacide aliphatique peut être un diacide aliphatique saturé ou insaturé.

Le diacide aliphatique saturé peut être linéaire, ramifié ou cyclique. En ce qui concerne le diacide aliphatique saturé linéaire, il peut être choisi parmi l'acide succinique, l'acide glutarique, l'acide adipique, l'acide pimélique, l'acide subérique, l'acide azélaïque, l'acide sébacique et leurs mélanges. De préférence, le diacide aliphatique saturé linéaire est choisi parmi l'acide succinique, l'acide adipique et leur mélange, tout préférentiellement l'acide succinique. Comme diacide aliphatique cyclique saturé, on peut citer l'acide 1,4 cyclohexanedioïque.

Le monomère (A) peut également être un diacide aliphatique insaturé tel que l'acide fumarique ou l'acide maléique ou l'acide itaconique ou un mélange de ces diacides.

En ce qui concerne le cas où le monomère (A) est un diester (ou un mélange de diesters), le diester est de préférence un diester méthylique et/ou éthylique. Le diester peut être choisi parmi les diesters des diacides précédemment cités. De préférence, le diester est un diester de diacide aromatique, de préférence un diester d'acide téréphtalique, d'acide isophtalique, d'acide phtalique, d'acide 2,6-naphtalène dicarboxylique, d'acide 1,4-naphtalène dicarboxylique, d'acide furanedicarboxylique, ou un mélange de ces diesters, tout préférentiellement un diester d'acide téréphtalique.

Selon l'invention, on peut également utiliser comme monomères (A) un mélange de diacide(s) et de diester(s).

Le monomère (B) est un 1,4 : 3,6-dianhydrohexitol. Comme expliqué précédemment, les 1,4 : 3,6-dianhydrohexitols ont l'inconvénient de provoquer la coloration du polyester lorsque l'on utilise les monomères et les procédés de fabrication classiquement utilisés pour leur fabrication. Le 1,4 : 3,6-dianhydrohexitol peut être l'isosorbide, l'isomannide, l'isoidide, ou un de leurs mélanges, de préférence est l'isosorbide. L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®} P.

De préférence, les monomères introduits dans le réacteur comprennent en outre un diol (C), différent des 1,4 : 3,6-dianhydrohexitols.

Le diol (C) peut être :
- un diol aliphatique, notamment un diol aliphatique linéaire (C1), un diol cycloaliphatique (C2), un diol aliphatique ramifié (C3) ou ;
- un diol aromatique (C4) ;
- ou un mélange de ces diols.

Le diol (C1) est avantageusement choisi parmi l'éthylène glycol, 1,3-propanediol, 1,4-butanediol, 1,5-pentanediol, 1,6-hexanediol, 1,8-octanediol, 1,10-decanediol, ou un mélange de ces diols, préférentiellement l'éthylène glycol, le 1,4-butanediol et un mélange de ces diols, très préférentiellement l'éthylène glycol.

Le diol (C2) peut être du cyclobutanediol, par exemple du tétraméthylcyclobutanediol, du bis-hydroxymethyl tricyclodécane ou du cyclohexanedimethanol, notamment du 1,4-cyclohexanedimethanol, du 1,2-cyclohexanedimethanol ou du 1,3-cyclohexanedimethanol ou un mélange de ces diols ou d'isomères de ces diols. En effet, ces diols peuvent être en configuration cis ou trans. Lorsque différents isomères existent pour un même monomère, sauf explicitement précisé, lorsque l'on parle de ce monomère, il peut s'agir d'un isomère de ce monomère ou d'un mélange d'isomères.

Le diol (C3) peut quant à lui être du 2-methyl-1,3-propanediol, du 2,2,4-trimethyl-1,3-pentanediol, du 2-ethyl-2-butyl-1,3-propanediol, du propylèneglycol, du néopentylglycol ou un mélange de ces diols.

Le diol (C) est avantageusement choisi parmi les diols aliphatiques, préférentiellement choisi parmi l'éthylène glycol, le 1,3-propanediol, le 1,4-butanediol, le 1,5-pentanediol, le 1,6-hexanediol, le 1,8-octanediol, le 1,10-decanediol, le 1,4-cyclohexanedimethanol, le 1,2-cyclohexanedimethanol, le 1,3-cyclohexanedimethanol et les mélanges de ces diols, très préférentiellement l'éthylène glycol, le 1,4-butanediol, le 1,4-cyclohexanedimethanol et les mélanges de ces diols, de manière toute préférée l'éthylène glycol, le 1,4-cyclohexanedimethanol et le mélange de ces diols.

Selon une première variante avantageuse dans laquelle on introduit dans le réacteur le diol (C), le monomère (A) est l'acide téréphtalique, le monomère (B) est l'isosorbide et le monomère (C) est l'éthylène glycol.

Selon une seconde variante avantageuse dans laquelle on introduit dans le réacteur le diol (C), le monomère (A) est l'acide téréphtalique, le monomère (B) est l'isosorbide et le diol (C) est un mélange d'éthylène glycol et de 1,4-cyclohexanedimethanol.

Avantageusement, le pourcentage molaire de monomères (A) par rapport au nombre total de moles de monomères (A), (B) et le cas échéant (C) va de 25 à 50%, de préférence de 33 à 49%, tout préférentiellement de 40 à 48%.

De préférence, lorsque des monomères (C) sont introduits dans le réacteur, le pourcentage molaire de (B), par rapport au nombre total de moles de monomères (B) et (C), va de 1 à 50%, de préférence de 2 à 30%, tout préférentiellement de 5 à 20%.

Les monomères (B) et (C) peuvent être introduits dans le réacteur sous forme d'une solution aqueuse.

Des monomères différents des monomères (A), (B) et le cas échéant (C), dits « monomères additionnels » peuvent également être ajoutés.

Il peut s'agir de monomères hydroxyacides porteurs d'une fonction hydroxyde et d'une fonction acide carboxylique. A titre d'exemple, l'hydroxyacide peut être l'acide glycolique, l'acide lactique, l'acide hydroxybutyrique, l'acide hydroxycaproique, l'acide hydroxyvalérique, l'acide 7-hydroxyheptanoïque, l'acide 8-hydroxyoctanoïque, l'acide 9-hydroxynonanoïque, l'acide hydroxyméthylfurancarboxylique, l'acide hydroxybenzoïque ou un mélange de ces hydroxyacides. On peut également citer comme monomère additionnel utilisable les dilactones telles que le glycolide ou le lactide.

De préférence, la quantité de monomères hydroxyacide est, par rapport à la somme totale des monomères, inférieure à 10% molaire. Les monomères introduits dans le réacteur peuvent être exempts de monomères hydroxyacide.

Les monomères additionnels peuvent également comprendre des monomères allongeurs de chaîne, qui sont quant à eux généralement introduits dans le réacteur avant ou pendant la formation du polyester fabriqué lors de l'étape de polymérisation, ou encore avant une seconde étape dite « étape de post-polymérisation » consistant à faire réagir le polyester formé lors de l'étape de polymérisation avec le monomère allongeur de chaîne. Cette étape de post-polymérisation peut notamment être une étape d'extrusion réactive du monomère allongeur de chaîne avec le polyester récupéré après l'étape de polymérisation.

Par « monomères allongeurs de chaîne », on entend un monomère comprenant deux fonctions autres que les fonctions hydroxyle, acide carboxylique et ester d'acide carboxylique, et susceptible de réagir avec ces mêmes fonctions. Les fonctions peuvent être des fonctions isocyanate, isocyanurate, lactame, lactone, carbonate, époxy, oxazoline et imide, lesdites fonctions pouvant être identiques ou différentes. A titre de monomères allongeur de chaînes utilisables dans la présente invention, on peut citer :
- les diisocyanates, de préférence le méthylènediphényl-diisocyanate (MDI), l'isophorone-diisocyanate (IPDI), le dicyclohexylméthane-diisocyanate (H12MDI), le toluène-diisocyanate (TDI), le naphthalène-diisocyanate (NDI), l'hexaméthylène-diisocyanate (HMDI) ou la lysine-diisocyanate (LDI), le diisocyanate aliphatique de masse molaire 600 g/mol obtenu à partir de dimères de diacide gras (DDI^{®}1410 Diisocyanate),
- les dimères, trimères et tetramères de diisocyanates,
- les prépolymères dits « isocyanate-free » résultant d'une réaction d'un diol ou d'une amine sur un diisocyanate dans des conditions telles que le prépolymère contienne une fonction isocyanate à chacune de ses extrémités (polymère α,ω-fonctionnel ou téléchélique) sans que du diisocyanate libre ne puisse être détecté,
- les dialkylcarbonates, notamment les dialkylcarbonates de dianhydrohexitols, et en particulier les dialkylcarbonates d'isosorbide,
- les dicarbamoylcaprolactames, de préférence le 1,1'-carbonyl-bis-caprolactame, les dicarbamoylcaprolactones,
- les diépoxydes,
- les composés comportant une fonction époxyde et une fonction halogénure, de préférence l'épichlorhydrine,
- les composés hétérocycliques, de préférence les bis-oxazolines, les bis-oxazolin-5-ones et les bis-azalactones,
- les dérivés de diesters méthyléniques ou éthyléniques, de préférence les dérivés de carbonates de méthyle ou d'éthyle,
- les mélanges quelconques d'au moins deux quelconques des produits précités.

De préférence, la quantité de monomères allongeurs de chaîne est, par rapport à la somme totale des monomères introduits, inférieure à 10% molaire. Les monomères introduits dans le réacteur peuvent être exempts de monomère allongeur de chaîne.

Les monomères additionnels peuvent également être des monomères polyfonctionnels. Par « monomères polyfonctionnel », on appelle un monomère susceptible de réagir avec les fonctions hydroxyde et/ou acide carboxylique et/ou ester d'acide carboxylique et dont la fonctionnalité est supérieure à 2. Les monomères polyfonctionnels peuvent être introduits dans le réacteur avant l'étape de polymérisation ou de post-polymérisation telle que décrite précédemment (le monomère polyfonctionnel remplaçant alors le monomère allongeur de chaîne), préférentiellement avant l'étape de polymérisation. Les fonctions réactives de ces agents de branchement peuvent être des fonctions hydroxyde, acide carboxylique, anhydride, isocyanate, isocyanurate, caprolactame, caprolactone, carbonate, époxy, oxazoline et imide, lesdites fonctions pouvant être identiques ou différentes, de préférence acide carboxylique, hydroxyde, époxyde ou isocyanate, tout préférentiellement acide carboxylique ou hydroxyde. La fonctionnalité de ces agents de branchements peut être de 3 à 6, de préférence de 3 à 4. Parmi les agents de branchements classiquement utilisés on peut citer : l'acide malique, l'acide citrique ou isocitrique, l'acide tartrique, l'acide trimesique, l'acide tricarballylique, l'acide cyclopentane tétracarboxylique, l'anhydride trimellitique, le mono ou dianhydride pyromellitique, le glycérol, le pentaérythritol, le dipentaérythritol, le monoanhydrosorbitol, le monoanhydromannitol, les huiles époxydées, l'acide dihydroxystéarique, le triméthylolpropane, des éthers de ces polyols comme par exemple le propoxylate de glycérol (commercialisé sous le nom de Voranol 450 par Dow Chemical), des polymères présentant des fonctions époxydes latérales, les triisocyanates, les tétraisocyanates ainsi que les homopolymères respectifs des di-, tri- et tétraisocyanates existants, les polyanhydrides, les alcoxysilanes, de préférence le tétraéthoxysilane.

De préférence, la quantité de monomères polyfonctionnels est, par rapport à la somme totale des monomères, inférieure à 10% molaire. Les monomères introduits dans le réacteur peuvent être exempts de monomères polyfonctionnels.

Avantageusement, par rapport à la totalité des monomères introduits dans le réacteur, la quantité molaire de monomère additionnel est inférieure à 20%, préférentiellement inférieure à 10%, voire inférieure à 5%. Les monomères introduits dans le réacteur peuvent être exempts de monomères additionnels.

Le procédé selon l'invention comprend également une étape d'introduction dans le réacteur d'un système catalytique comprenant :
- soit un catalyseur comprenant l'élément germanium et un catalyseur comprenant l'élément aluminium ;
- soit un catalyseur comprenant les éléments germanium et aluminium ;
- ou soit un mélange de ces catalyseurs.

Selon la première variante, en ce qui concerne le catalyseur comprenant l'élément germanium, il peut être choisi parmi les composés suivants : les sels d'acides carboxyliques aliphatiques tels que formiate, acétate, propionate, butyrate, oxalate, acrylate, méthacrylate, les sels d'acides carboxyliques aromatiques tels que benzoate, les sels d'acides carboxyliques halogenés tels que trichloracétate, trifluoroacétate, les sels hydroxycarbonates tels que lactate, citrate, oxalate, les sels minéraux tels que carbonate, sulfate, nitrate, phosphate, phosphonate, phosphinate, hydrogénosulfate, hydrogénocarbonate, hydrogénophosphate, sulfite, thiosulfate, hydrochlorure, hydrobromure, chlorure, chlorate, bromure, bromate, les organosulfonates tels que le 1-propane sulfonate, 1-pentane sulfonate, naphtalène sulfonate, les sulfates organiques tels que le lauryle sulfate, les alkoxydes tels que méthoxy, éthoxy, propoxy, iso-propoxy, butoxy, les acétylacétonates, les oxydes, les oxydes mixtes comprenant d'autres métaux ou les hydroxydes, de préférence le dioxyde de germanium.

Le catalyseur comprenant l'élément aluminium peut être choisi parmi les composés suivants : les sels d'acides carboxyliques aliphatiques tels que formiate, acétate, propionate, butyrate, oxalate, acrylate, méthacrylate, les sels d'acides carboxyliques aromatiques tels que benzoate, les sels d'acides carboxyliques halogenés tels que trichloracétate, trifluoroacétate, les sels hydroxycarbonates tels que lactate, citrate, oxalate, les sels minéraux tels que carbonate, sulfate, nitrate, phosphate, phosphonate, phosphinate, hydrogénosulfate, hydrogénocarbonate, hydrogénophosphate, sulfite, thiosulfate, hydrochlorure, hydrobromure, chlorure, chlorate, bromure, bromate, les organosulfonates tels que le 1-propane sulfonate, 1-pentane sulfonate, naphtalène sulfonate, les sulfates organiques tels que le lauryle sulfate, les alkoxydes tels que méthoxy, éthoxy, propoxy, iso-propoxy, butoxy, les acétylacétonates, les oxydes, les oxydes mixtes comprenant d'autres métaux ou les hydroxydes, de préférence le triethoxyde d'aluminium.

Selon la deuxième variante, le système catalytique comprend un catalyseur comprenant les éléments germanium et aluminium, par exemple comprend un oxyde mixte d'aluminium et de germanium.

Selon une troisième variante, le système catalytique comprend un mélange des catalyseurs décrits dans les deux variantes précédentes.

Le système catalytique peut être choisi de manière à ce que le ratio élémentaire molaire Ge : Al aille de 0,05 : 1 à 500 : 1, avantageusement de 0,2 à 300 :1, de préférence de 0,33: 1 à 1,25: 1. Il est précisé que ce ratio élémentaire prend uniquement en considération les métaux compris dans le système catalytique.

Selon les première et troisième variantes, les catalyseurs peuvent être choisis et présents dans des quantités telles que le ratio élémentaire molaire Ge : Al soit celui décrit précédemment.

Selon la deuxième variante, le catalyseur comprenant l'élément germanium et aluminium est choisi de telle manière que le ratio élémentaire molaire Ge : Al soit celui décrit précédemment.

Le système catalytique peut comprendre en outre des métaux additionnels.

Selon un mode de réalisation avantageux de l'invention, le système catalytique comprend l'élément cobalt, c'est-à-dire que :
- le système catalytique comprend en outre un catalyseur additionnel comprenant l'élément cobalt ;
- ou au moins un des catalyseurs comprenant l'élément germanium et/ou l'élément aluminium comprend en outre l'élément cobalt.

L'utilisation d'un système catalytique comprenant l'élément cobalt permet notamment d'obtenir des compositions de polyester présentant une coloration b* améliorée.

A titre d'exemple de catalyseur additionnel comprenant l'élément cobalt, on peut citer les composés suivants : les sels d'acides carboxyliques aliphatiques tels que formiate, acétate, propionate, butyrate, oxalate, acrylate, méthacrylate, les sels d'acides carboxyliques aromatiques tels que benzoate, les sels d'acides carboxyliques halogenés tels que trichloracétate, trifluoroacétate, les sels hydroxycarbonates tels que lactate, citrate, oxalate, les sels minéraux tels que carbonate, sulfate, nitrate, phosphate, phosphonate, phosphinate, hydrogénosulfate, hydrogénocarbonate, hydrogénophosphate, sulfite, thiosulfate, hydrochlorure, hydrobromure, chlorure, chlorate, bromure, bromate, les organosulfonates tels que le 1-propane sulfonate, 1-pentane sulfonate, naphtalène sulfonate, les sulfates organiques tels que le lauryle sulfate, les alkoxydes tels que méthoxy, éthoxy, propoxy, iso-propoxy, butoxy, les acétylacétonates, les oxydes, les oxydes mixtes comprenant d'autres métaux ou les hydroxydes, de préférence l'acetate de cobalt.

Lorsqu'au moins un des catalyseurs comprenant l'élément germanium et/ou l'élément aluminium comprend en outre l'élément cobalt, ce catalyseur peut être un oxyde mixte d'aluminium, de germanium et de cobalt ; un oxyde mixte d'aluminium et de cobalt ; ou un oxyde mixte de germanium et de cobalt.

Pour des raisons de simplicité et disponibilité des catalyseurs, on préfère utiliser un système catalytique d'un système catalytique comprenant un catalyseur comprenant l'élément germanium et un catalyseur comprenant l'élément aluminium. Avantageusement, la quantité massique totale de métal compris dans le système catalytique introduit dans le réacteur, rapportée à la quantité massique totale de polymère obtenu, va de 50 à 500 ppm.

Le système catalytique peut être introduit dans le réacteur avant ou pendant l'étape de polymérisation, préférentiellement avant l'étape de polymérisation. Il peut être introduit par différents stades d'introduction, par exemple en introduisant différents catalyseurs à différents moments. De préférence, lorsque le système catalytique comprend différents catalyseurs, ils sont introduits simultanément dans le réacteur, tout préférentiellement simultanément et avant l'étape de polymérisation. Le ou les catalyseurs peuvent être utilisés en l'état ou sous forme de solution(s), notamment aqueuse ou alcoolique, de préférence sous forme de solution dans un monomère tel que l'éthylène glycol, dans laquelle est (sont) dilué(s) ou dispersé(s) le ou les catalyseurs.

Le procédé selon l'invention comprend également une étape de polymérisation des monomères pour former le polyester. Avantageusement, cette étape de polymérisation se fait par voie fondue, c'est-à-dire en maintenant le milieu réactionnel à l'état fondu dans le réacteur, en l'absence de solvant. Cette étape de polymérisation peut se faire par apport de chaleur de chaleur. Cette étape de polymérisation peut également se faire sous vide.

De préférence, l'étape de polymérisation des monomères comprend :
- un premier stade pendant lequel le milieu réactionnel est agité à une température allant de 220 à 310 °C afin de former des oligomères, avantageusement de 245 à 275 °C ;
- un second stade pendant lequel les oligomères formés sont agités sous vide à une température allant de 240 à 330°C afin de former le polyester, avantageusement de 255 à 275°C.

Le milieu réactionnel peut être agité par tout type d'agitateur classiquement utilisé pour la synthèse de polyesters. La vitesse d'agitation peut être maintenue constante lors de l'étape de polymérisation ou la vitesse d'agitation peut être réduite au cours de la réaction, au fur et à mesure que la viscosité du polyester augmente.

Le premier stade peut se faire à pression atmosphérique ou sous pression, généralement à une pression allant de 1,1 à 10 bar.

Les oligomères formés lors du premier stade présentent généralement une masse molaire moyenne en nombre inférieure à 5000 g/mol, souvent inférieure à 4000 g/mol. Ils présentent généralement un indice de viscosité inférieur à 20mL/g.

Le suivi de ce premier stade peut se faire en contrôlant l'évolution de la quantité de distillats extraits du réacteur.

En ce qui concerne le second stade de l'étape de polymérisation, il se fait sous vide, de préférence à une pression inférieure à 10 mbar, tout préférentiellement inférieure à 1 mbar.

Le suivi de la réaction de polymérisation peut se faire en contrôlant l'évolution de la quantité de couple mesuré sur l'agitateur ou par tout autre système permettant d'évaluer la viscosité du milieu réactionnel fondu.

Avantageusement, le système catalytique, comprenant le ou les catalyseurs précédemment décrits, est introduit dans le réacteur avant le premier stade de l'étape de polymérisation.

De préférence, le procédé comprend une étape de désoxygénation du réacteur réalisée préalablement à l'étape de polymérisation des monomères, et notamment avant le premier stade de formation des oligomères, avantageusement en plaçant le réacteur sous atmosphère d'un gaz inerte tel que l'azote. Cette étape de désoxygénation est généralement réalisée à basse température, c'est-à-dire souvent à une température inférieure à 100°C. Ceci peut se faire en réalisant au moins une fois une séquence d'un stade de vide, par exemple entre 100 et 700 mbar dans le réacteur suivi d'un stade d'introduction d'un gaz inerte dans le réacteur, par exemple entre 1,2 et 2 bars. Ce cycle vide-introduction de gaz inerte peut se faire par exemple de 3 à 5 fois. De préférence, ce cycle vide-azote est réalisé à une température entre 60 et 80°C afin que les réactifs, et notamment les monomères (B), soient totalement fondus. Cette étape de désoxygénation présente l'avantage d'améliorer encore les propriétés de coloration du polyester obtenu à la fin du procédé.

Lorsque le réacteur est mis sous vide, notamment lors du second stade de polymérisation des oligomères, il est à noter qu'une petite partie des monomères peut être extraite du réacteur et donc être perdue. Il s'agit en particulier d'une petite partie des monomères les plus volatils et en excès. Cette perte de monomères peut également aboutir à l'entraînement d'une légère perte de catalyseur.

En outre, on peut également introduire dans le réacteur avant l'étape de polymérisation des additifs dits « additifs de polymérisation ».

Parmi les additifs de polymérisation, on peut citer les anti-oxydants qui permettent de réduire encore la coloration du polyester obtenu. Les anti-oxydants peuvent être des anti-oxydants primaires et/ou secondaires. L'anti-oxydant primaire peut être un phénol encombré stériquement tels que les composés Hostanox^{®} 0 3, Hostanox^{®} 0 10, Hostanox^{®} 0 16, UItranox^{®} 210, Ultranox^{®}276, Dovernox^{®} 10, Dovernox^{®} 76, Dovernox^{®} 3114, Irganox^{®} 1010, Irganox^{®} 1076 ou un phosphonate tel que I'lrgamod^{®} 195. L'anti-oxydant secondaire peut être des composés phosphorés trivalents tels que UItranox^{®} 626, Doverphos^{®} S-9228, Hostanox^{®} P-EPQ, ou l'Irgafos 168.

Il est également possible d'introduire comme additif de polymérisation dans le réacteur au moins un composé susceptible de limiter les réactions parasites d'éthérification, tel que l'acétate de sodium, le tétraméthylammonium hydroxyde, ou le tétraéthylammonium hydroxyde.

Le procédé selon l'invention comprend également une étape de récupération d'une composition de polyester comprenant le polyester et le système catalytique. On peut récupérer cette composition en l'extrayant du réacteur sous forme d'un jonc de polymère fondu. Après refroidissement, ce jonc peut être transformé en granulés en utilisant les techniques classiques de granulation.

Le polyester obtenu à l'issue de l'étape de polycondensation peut, après refroidissement, être semi-cristallin ou amorphe.

Le procédé selon l'invention peut également comprendre, après l'étape de récupération de la composition de polyester, une étape de polycondensation à l'état solide (PCS). L'Homme du métier peut aisément réaliser cette étape de PCS à partir de polyesters semi-cristallins.

L'invention a également pour objet la composition de polyester, susceptible d'être obtenue selon le procédé de l'invention, dans laquelle le polyester contient au moins un motif 1,4 : 3,6-dianhydrohexitol, la composition comprenant en outre un système catalytique comprenant soit un catalyseur comprenant l'élément germanium et un catalyseur comprenant l'élément aluminium, soit un catalyseur comprenant les éléments germanium et aluminium ou soit un mélange de ces catalyseurs Le système catalytique compris dans la composition de polyester, est identique à celui décrit précédemment pour le procédé selon l'invention. Ainsi, dans la composition de polyester selon l'invention, les métaux compris dans le système catalytique peuvent présenter un ratio élémentaire molaire Ge : Al qui va de 0,05 : 1 à 500 : 1, avantageusement de 0,2 à 300 :1, de préférence de 0,33 : 1 à 1,25 : 1.

Les quantités de catalyseur dans la composition de polyester sont également proches mais peuvent être légèrement inférieures à celles introduites dans le réacteur, du fait de l'éventuelle perte par entraînement de catalyseur décrite précédemment. Toutefois, on peut considérer que ces pertes sont relativement faibles. La quantité massique totale de métal compris dans le système catalytique de la composition de polyester, rapportée à la quantité massique totale de polyester, va généralement de 30 à 500 ppm.

Les quantités en métal des catalyseurs comprises dans le polyester peuvent être déterminées par analyse élémentaire.

Par « motifs monomériques », on entend selon l'invention des motifs compris dans le polyester qui peuvent être obtenus après polymérisation d'un monomère. A titre d'exemple, en ce qui concerne les motifs éthylène glycol et acide téréphtalique compris dans un PET, ils peuvent soit être obtenus par réaction d'estérification d'éthylène glycol et d'acide téréphtalique, soit par une réaction de transestérification d'éthylène glycol et d'ester d'acide téréphtalique.

Le polyester compris dans la composition selon l'invention peut comprendre, par rapport à la totalité des motifs de diols (B) et le cas échéant (C) du polyester, de 0,1 à 100% de motifs 1,4 : 3,6-dianhydrohexitol (100% est le cas où aucun monomère (C) n'est employé lors du procédé), avantageusement de 1 à 50%, de préférence de 2 à 30%, tout préférentiellement de 5 à 20%.

Selon une première variante toute préférée, le polyester compris dans la composition comprend, par rapport à la somme des motifs monomériques :
- de 45 à 55% de motifs acide téréphtalique ;
- de 1 à 25% d'isosorbide ;
- de 20 à 54% d'éthylène glycol.

Selon une seconde variante toute préférée, le polyester compris dans la composition comprend, par rapport à la somme des motifs monomériques :
- de 45 à 55% de motifs acide téréphtalique ;
- de 1 à 25%de motifs isosorbide ;
- de 1 à 53% de motifs éthylène glycol ;
- de 1 à 53% de motifs 1 ,4-cyclohexanedimethanol.

Le nombre de motifs diacide et le nombre de motifs diols sont généralement sensiblement identiques. Le ratio de motifs diols/motifs diacide compris dans le polyester peut aller de 1,15/1 à 0,85/1, souvent de 1,08/1 à 0,92/1.

Les quantités en différents motifs dans le polyester peuvent être déterminées par RMN ¹H.

L'homme de l'art peut aisément trouver les conditions d'analyse pour déterminer les quantités en chacun des motifs du polyester. Par exemple, à partir d'un spectre RMN d'un poly(éthylène-co-isosorbide téréphtalate), les déplacements chimiques relatifs à l'éthylène glycol sont compris entre 4,4 et 5,0 ppm, les déplacements chimiques relatifs au cycle téréphtalate sont compris entre 7,8 et 8,4 ppm et les déplacements chimiques relatifs à l'isosorbide sont compris entre 4,1 ppm et 5,8 ppm. L'intégration de chaque signal permet de déterminer la quantité de chaque motif du polyester.

De préférence, la composition de polyester présente une clarté L* supérieure à 45, de préférence supérieure à 55.

Dans le cas où une étape de polycondensation à l'état solide est réalisée, la clarté L* peut atteindre voire dépasser 65.

De préférence, la composition de polyester présente une coloration b* compris entre -10 et 10, de préférence entre -6 et 6. Ce paramètre permet de quantifier la coloration allant du bleu (si b* est négatif) au jaune (si b* est positif).

Les paramètres L* et b* peuvent être déterminés à l'aide d'un spectrophotomètre, en utilisant le modèle CIE Lab.

La composition de polyester peut présenter une viscosité relative supérieure à 35 mL/g, de préférence supérieure à 50 mL/g. L'indice de viscosité peut être déterminé selon la méthode décrite dans la partie exemples.

La masse molaire moyenne en nombre du polyester compris dans la composition de polyester selon l'invention peut aller de 5000 à 50000 g/mol.

La masse molaire du polyester peut être déterminée par les méthodes classiques, comme par exemple par chromatographie d'exclusion stérique (SEC) dans un mélange de chloroforme et d'1,1,1,3,3,3-Hexafluoro-2-propanol dans un ratio volumique 98/2. La détection du signal peut alors être effectuée par un réfractomètre différentiel calibré avec des étalons de polyméthacrylate de méthyle.

De préférence, la température de transition vitreuse du polyester est supérieure ou égale à 80°C. La température de transition vitreuse du polyester peut être mesurée par les méthodes classiques, notamment en utilisant la calorimétrie différentielle à balayage (DSC) en utilisant une vitesse de chauffe de 10K/min. Le protocole expérimental est détaillé dans la partie exemples ci-après. Avantageusement, le polyester présente une température de transition vitreuse allant de 80 à 190°C.

L'invention porte également sur une composition comprenant le polyester selon l'invention et au moins un additif ou au moins un polymère additionnel ou au moins un mélange de ceux-ci.

La composition de polyester selon l'invention peut comprendre les additifs de polymérisation éventuellement utilisés lors du procédé. Elle peut également comprendre d'autres additifs et/ou polymères additionnels qui sont généralement ajoutés lors d'une étape de mélange thermomécanique ultérieure.

A titre d'exemple d'additif, on peut citer les charges ou les fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou la perméabilité à l'eau ou aux gaz. La composition peut comprendre de 0,1 à 75% en masse charges et/ou fibres par rapport au poids total de la composition, par exemple de 0,5 à 50%. L'additif utile à la composition selon l'invention peut également comprendre des agents opacifiants, des colorants et des pigments. Ils peuvent être choisis parmi l'acétate de cobalt et les composés suivants : HS-325 Sandoplast^{®} RED BB (qui est un composé porteur d'une fonction azo également connu sous le nom Solvent Red 195), HS-510 Sandoplast^{®} Blue 2B qui est une anthraquinone, Polysynthren^{®} Blue R, et Clariant^{®} RSB Violet.

La composition peut également comprendre comme additif un agent de procédé, ou *processing aid,* pour diminuer la pression dans l'outil de mise en œuvre. Un agent de démoulage permettant de réduire l'adhésion aux matériels de mise en forme du polyester, tels que les moules ou les cylindres de calandreuses peut également être utilisé. Ces agents peuvent être sélectionnés parmi les esters et les amides d'acide gras, les sels métalliques, les savons, les paraffines ou les cires hydrocarbonées. Des exemples particuliers de ces agents sont le stéarate de zinc, le stéarate de calcium, le stéarate d'aluminium, les stéaramide, les érucamide, les béhénamide, les cires d'abeille ou de *candelilla.*

La composition selon l'invention peut comprendre également d'autres additifs tels que les agents stabilisants, par exemple les agents stabilisants lumière, les agents stabilisants UV et les agents stabilisants thermique, les agents fluidifiants, les agents retardateurs de flamme et les agents antistatiques.

La composition peut comprendre en outre un polymère additionnel, différent du polyester selon l'invention. Ce polymère peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

La composition peut également comprendre comme polymère additionnel un polymère permettant d'améliorer les propriétés au choc du polymère, notamment les polyoléfines fonctionnelles telles que les polymères et copolymères d'éthylène ou de propylène fonctionnalisés, des copolymères cœur-écorce ou des copolymères à bloc.

La composition selon l'invention peut également comprendre des polymères d'origine naturelle, tels que l'amidon, la cellulose, les chitosans, les alginates, les protéines telles que le gluten, les protéines de pois, la caséine, le collagène, la gélatine, la lignine, ces polymères d'origine naturelle pouvant ou non être modifiés physiquement ou chimiquement. L'amidon peut être utilisé sous forme déstructurée ou plastifiée. Dans le dernier cas, le plastifiant peut être de l'eau ou un polyol, notamment le glycérol, le polyglycérol, l'isosorbide, les sorbitans, le sorbitol, le mannitol ou encore de l'urée. Pour préparer la composition, on peut notamment utiliser le procédé décrit dans le document WO 2010/010282 A1.

La composition selon l'invention peut être fabriquée par les méthodes classiques de transformation des thermoplastiques. Ces méthodes classiques comprennent au moins une étape de mélange à l'état fondu ou ramolli des polymères et une étape de récupération de la composition. On peut réaliser ce procédé dans des mélangeurs internes à pales ou à rotors, des mélangeurs externes, des extrudeuses mono-vis, bi-vis co-rotatives ou contrarotatives. Toutefois, on préfère réaliser ce mélange par extrusion, notamment en utilisant une extrudeuse co-rotative.

Le mélange des constituants de la composition peut se faire sous atmosphère inerte.

Dans le cas d'une extrudeuse, on peut introduire les différents constituants de la composition à l'aide de trémies d'introduction situées le long de l'extrudeuse.

L'invention porte également sur un article comprenant le polyester ou la composition selon l'invention.

Cet article peut être de tout type et être obtenu en utilisant les techniques classiques de transformation.

Il peut s'agir par exemple de fibres ou de fils utiles à l'industrie textile ou d'autres industries. Ces fibres ou fils peuvent être tissés pour former des tissus ou encore des non-tissés.

L'article selon l'invention peut également être un film, une feuille. Ces films ou feuilles peuvent être fabriqués par les techniques de calandrage, d'extrusion film cast, d'extrusion soufflage de gaine.

L'article selon l'invention peut aussi être un récipient pour transporter des gaz, des liquides ou/et des solides. Il peut s'agir de biberons, de gourdes, de bouteilles, par exemple de bouteilles d'eau gazeuse ou non, de bouteilles de jus, de bouteilles de soda, de bombonnes, de bouteilles de boissons alcoolisées, de flacons, par exemple de flacons de médicament, de flacons de produits cosmétiques, des plats, par exemple pour plats cuisinés, de plats pour micro-ondes ou encore de couvercles. Ces récipients peuvent être de toute taille. Ils peuvent être fabriqués par extrusion soufflage, thermoformage ou injection soufflage.

Ces articles peuvent également être des articles optiques, c'est-à-dire des articles nécessitant de bonnes propriétés optiques tels que des lentilles, des disques, des panneaux transparents ou translucides, des fibres optiques, des films pour les écrans LCD ou encore des vitres. Ces articles optiques présentent l'avantage de pouvoir être placés à proximité de sources de lumière et donc de chaleur, tout en conservant une excellente stabilité dimensionnelle et une bonne tenue à la lumière.

Les articles peuvent également être des articles multicouches, dont au moins une couche comprend le polymère ou la composition selon l'invention. Ces articles peuvent être fabriqués par un procédé comprenant une étape de co-extrusion dans le cas où les matériaux des différentes couches sont mis en contact à l'état fondu. A titre d'exemple, on peut citer les techniques de co-extrusion de tube, co-extrusion de profilé, de co-extrusion soufflage (en anglais « blowmolding ») de bouteille, de flacon ou de réservoir, généralement regroupés sous le terme de co-extrusion soufflage de corps creux, co-extrusion gonflage appelée également soufflage de gaine (en anglais « film blowing ») et co-extrusion à plat (« en anglais « cast coextrusion »).

Ils peuvent également être fabriqués selon un procédé comprenant une étape d'application d'une couche de polyester à l'état fondu sur une couche à base de polymère organique, de métal ou de composition adhésive à l'état solide. Cette étape peut être réalisée par pressage, par surmoulage, stratification ou laminage (en anglais « lamination »), extrusion-laminage, couchage (en anglais « coating »), extrusion-couchage ou enduction.

L'invention porte également sur l'utilisation du système catalytique précédemment décrit dans un procédé de polymérisation pour réduire la coloration d'un polyester contenant au moins un motif 1,4 : 3,6-dianhydrohexitol.

Il est précisé que tous les modes de réalisation décrits précédemment, qui concernent le procédé et la composition de polyester selon l'invention, sont applicables à l'utilisation selon l'invention.

L'invention va maintenant être illustrée dans les exemples ci-après. Il est précisé que ces exemples ne limitent en rien la présente invention.

### EXEMPLES

Les propriétés des polymères ont été étudiées avec les techniques suivantes :
La viscosité réduite en solution est évaluée à l'aide d'un viscosimètre capillaire Ubbelohlde à 25°C dans un mélange équimassique de phénol et d'orthodichlorobenzène après dissolution du polymère à 130°C sous agitation. Pour ces mesures, la concentration de polymère introduite est de 5g/L.
La couleur du polymère a été mesurée sur les granulés à l'aide d'un spectrophotomètre Konica Minolta CM-2300d.

Pour les exemples illustratifs présentés ci-dessous les réactifs suivants ont été utilisés :

### Monomères

Monomère (A) : Acide téréphtalique (pureté 99+%) de Accros
Monomère (B) : Isosorbide (pureté >99,5%) Polysorb^{®} P de Roquette Frères
Monomère (C) : Ethylène glycol (pureté >99,8%) de Sigma-Aldrich

### Catalyseurs

Butoxyde de titane (>97%) de Sigma Aldrich
Dioxyde de germanium (>99,99%) de Sigma Aldrich
Triethoxyde d'aluminum (>97%) de Sigma Aldrich
n-Butylétain hydroxyde oxyde (95%) de ABCR GmbH
Trioxyde de molybdène (>99,5%) de Sigma Aldrich
Acétate de cobalt tétrahydrate (99,999%) de Sigma Aldrich

### Additifs de polymérisation

Irgamod^{®} 195 de BASF SE : Anti-oxydant
Irganox 1010 de BASF SE : Anti-oxydant
Hostanox PEPQ de Clariant : Anti-oxydant
Acide phosphorique (99,999+%) de Sigma Aldrich : Anti-oxydant
Acétate de sodium trihydrate (pureté >99,0%) : additif de polymérisation limitant les réactions d'éthérification
Tetraéthylammonium hydroxyde en solution à 40% dans l'eau de Sigma Aldrich : additif de polymérisation limitant les réactions d'éthérification

### Préparation des polyesters :

### Exemple 1 :

Dans un réacteur de 7,5L sont ajoutés 893,8 g (14,4 mol) d'éthylène glycol, 701,1 g (4,8 mol) d'isosorbide, 2656,1 g (16,0 mol) d'acide téréphtalique, 0,181 g d'acétate de sodium et 0,707 g d'Irgamod 195. 0,394 g de dioxyde de germanium (soit Ge=80ppm) et 1,216 g de triéthoxyde d'aluminium (soit Al=60ppm) sont également introduits en tant que catalyseurs.

Pour extraire l'oxygène résiduel des cristaux d'isosorbide, 4 cycles vide-azote sont effectués entre 60 et 80°C. Le mélange réactionnel est ensuite chauffé à 260°C (4°C/min) sous 5,7 bars de pression et sous agitation constante (150 tr/min). Le taux d'estérification est estimé à partir de la quantité de distillat collectée. Puis, la pression est réduite à 0,7 mbar en 90 minutes et la température amenée à 270°C. Ces conditions de vide et de température ont été maintenues jusqu'à obtenir une augmentation de couple de 15Nm par rapport au couple initial. Le temps de polycondensation nécessaire est reporté dans le Tableau ci-dessous. Enfin, un jonc de polymère est coulé par la vanne de fond du réacteur, refroidi dans un bac d'eau thermo-régulé et découpé sous forme de granulés d'environ 15 mg.

La résine de poly(éthylèlène-co-isosorbide) téréphtalate ainsi obtenue a une viscosité réduite en solution de 55,8 mL/g et masse molaire en nombre de 10 300 g.mol⁻¹. Les granulés de polymère obtenus sont jaune pâle et présentent les caractéristiques de coloration suivantes : L*=56,7, a*=0,0 et b*=9,4.

### Exemple 2-6 et Contre-Exemples 1-7 :

Pour la série d'exemple de 2 à 13, des conditions de synthèse identiques ont été utilisées à l'exception de la nature et des proportions de catalyseurs. Ces conditions sont données dans le Tableau 1.

**Tableau 1 : Récapitulatif des essais de fabrication de poly(éthylène-co-isosorbide) téréphtalate**

| | **Système catalytique** | | | | | | **t_{poly}. (min)** | **η_{red} (mL/g)** | **Couleur** | | | |
|---|---|---|---|---|---|---|---|---|---|---|---|---|
| | **M1 (ppm)** | | **M2 (ppm)** | | **M3 (ppm)** | | | | | **L*** | **a*** | **b*** |
| **CEx1** | Ge | 80 | - | - | - | - | 288 | 56,2 | Jaune | 52,3 | 0,7 | 12,6 |
| **Ex1** | Ge | 80 | Al | 60 | - | - | 260 | 55,8 | Jaune pale | 56,7 | 0,0 | 9,4 |
| **Ex2** | Ge | 120 | Al | 45 | - | - | 240 | 54,9 | Jaune pale | 60,9 | 0,2 | 9,8 |
| **CEx2** | Ge | 200 | - | - | - | - | 223 | 54,6 | Jaune | 59,0 | 0,4 | 11,2 |
| **Ex3** | Ge | 200 | Al | 60 | - | - | 207 | 54,8 | Jaune pale | 61,0 | 0,0 | 9,4 |
| **Ex4** | Ge | 200 | Al | 150 | - | - | 213 | 53,4 | Jaune pale | 60,8 | 0,1 | 7,4 |
| **CEx3** | Ge | 80 | Co | 30 | - | - | 287 | 56,2 | Gris | 45,2 | 0,3 | 3,9 |
| **CEx4** | Ge | 200 | Co | 30 | - | - | 222 | 54,1 | Gris | 44,9 | 0,3 | 3,8 |
| **CEx5** | Ge | 80 | Mo | 106 | - | - | 200 | 52,2 | Noir | 37,5 | 0,2 | -0,5 |
| **CEx6** | Ti | 8 | Al | 60 | - | - | 310 | 53,8 | Orangé | 54,3 | 1,8 | 13,6 |
| **CEx7** | Sn | 120 | Al | 60 | - | - | 173 | 55,9 | Orange foncé | 49,1 | 2,9 | 11,2 |
| **Ex5** | Ge | 80 | Al | 60 | Co | 15 | 256 | 55,5 | Gris | 45,9 | 0,5 | 5,7 |
| **Ex6** | Ge | 80 | Al | 60 | Co | 30 | 254 | 51,8 | Gris | 46,8 | 0,5 | 2,0 |

### Exemple 7 :

Dans un réacteur de 7,5L sont ajoutés 422,1 g (6,8 mol) d'éthylène glycol, 418,2 g (2,9 mol) d'isosorbide, 1143,6g (7,9 mol) de 1,4-cyclohexanedimethanol, 2656,0 g (16,0 mol) d'acide téréphtalique, 0,60 g de tetraethylammonium hydroxyde et 1,94 g d'lrganox 1010. 0,703 g de dioxyde de germanium (soit Ge=126ppm) et 0,538g d'acétate de cobalt tétrahydrate (33ppm) sont également introduits en tant que catalyseurs.

Pour extraire l'oxygène résiduel des cristaux d'isosorbide, 4 cycles vide-azote sont effectués entre 60 et 80°C. Le mélange réactionnel est ensuite chauffé à 250°C (4°C/min) sous 2,5 bars de pression et sous agitation constante (150 tr/min). Le taux d'estérification est estimé à partir de la quantité de distillat collectée. Puis, la pression est réduite à Pression atmosphérique en 30min. A pression atmosphérique, 0,71 g de triéthoxyde d'aluminium (soit AI=30ppm), 0,42g d'acide phosphorique et 1,95g d'Hostanox PEPQ sont ajoutés dans le réacteur. La pression est ensuite réduite à 0,7 mbar en 30 minutes et la température amenée à 265°C. Ces conditions de vide et de température ont été maintenues pendant 220min jusqu'à obtenir une augmentation de couple de 12Nm par rapport au couple initial. Enfin, un jonc de polymère est coulé par la vanne de fond du réacteur, refroidi dans un bac d'eau thermo-régulé et découpé sous forme de granulés d'environ 15 mg.

La résine ainsi obtenue a une viscosité réduite en solution de 61,5 mL/g. Les granulés de polymère obtenus sont gris et présentent les caractéristiques de coloration suivantes : L*= 48,8 a*= -0,4 et b*= 0,3.

Les exemples montrent que l'utilisation d'aluminium en complément du germanium permet de réduire de manière importante la coloration du polymère final (à η_{red} constante). Ceci est remarquable en comparant les essais CEX1 avec Ex1 pour lesquels on observe une augmentation du paramètre L* ainsi qu'une diminution des paramètres a* et b*. Les mêmes observations réalisées avec des taux plus élevés de catalyseurs 200ppm de Ge (Cex2, Ex3, Ex4) ou avec du Co en plus du Ge et de l'Al (Ex6 et CEx3) conduisent à des observations similaires en terme de coloration.

Les essais CEx 5, Cex6 et Cex7 montrent l'intérêt du mélange Ge/AI par rapport à d'autres mélanges de métaux :
- Le mélange Ge/Mo (CEx. 5) qui est un autre système catalytique utilisé dans WO 2004/048437 conduit à un polymère noir.
- Dans l'exemple CEx6 l'ajout de l'aluminium au titane ne permet pas d'obtenir une synergie catalytique comparable au couple Ge/AI, la polymérisation est beaucoup plus longue et le polymère final et très coloré. Il est précisé que 8ppm de Ti est une quantité usuelle utilisée pour la synthèse de PET.
- Enfin l'essai CEx 7 montre que l'utilisation d'étain en combinaison avec l'aluminium ne permet pas non plus d'obtenir un polymère avec une faible coloration.

L'exemple 7 montre une autre façon de conduire l'invention cette fois en utilisant un mélange de diols comprenant de l'éthylène glycol, de l'isosorbide et du cyclohexanediméthanol.

## Revendications

1. Procédé de fabrication d'un polyester contenant au moins un motif 1,4 : 3,6-dianhydrohexitol comprenant au moins :
• une étape d'introduction dans un réacteur de monomères comprenant au moins un monomère (A) qui est un diacide ou un diester et au moins un monomère (B) qui est un 1,4 : 3,6-dianhydrohexitol ;
• une étape d'introduction dans le réacteur d'un système catalytique comprenant soit un catalyseur comprenant l'élément germanium et un catalyseur comprenant l'élément aluminium, soit un catalyseur comprenant les éléments germanium et aluminium ou soit un mélange de ces catalyseurs ;
• une étape de polymérisation desdits monomères pour former le polyester ;
• une étape de récupération d'une composition de polyester comprenant le polyester et le système catalytique.

2. Procédé de fabrication selon la revendication 1, **caractérisé en ce que** le monomère (A) est un monomère aromatique, préférentiellement choisi parmi l'acide téréphtalique, l'acide isophtalique, l'acide phtalique, l'acide 2,6-naphtalène dicarboxylique, l'acide 1,4-naphtalène dicarboxylique, un acide furanedicarboxylique, un mélange de ces diacides, un diester de ces diacides et un mélange de ces diesters.

3. Procédé de fabrication selon la revendication 2, **caractérisé en ce que** le monomère (A) est l'acide téréphtalique ou un diester d'acide téréphtalique.

4. Procédé de fabrication selon l'une quelconque des revendications 1 à 3, **caractérisé en ce que** lesdits monomères comprennent en outre au moins un diol (C), différent des 1,4 : 3,6-dianhydrohexitols, notamment un diol choisi parmi les diols aliphatiques, préférentiellement un choisi parmi l'éthylène glycol, 1,3-propanediol, 1,4-butanediol, 1,5-pentanediol, 1,6-hexanediol, 1,8-octanediol, 1,10-decanediol, le 1,4-cyclohexanedimethanol, le 1,2-cyclohexanedimethanol, le 1,3-cyclohexanedimethanol et un mélange de ces diols, très préférentiellement l'éthylène glycol, le 1,4-butanediol, le 1,4-cyclohexanedimethanol et un mélange de ces diols, de manière toute préférée l'éthylène glycol, le 1,4-cyclohexanedimethanol et un mélange de ces diols.

5. Procédé de fabrication selon l'une quelconque des revendications 1 à 4, **caractérisé en ce que** l'étape de polymérisation desdits monomères comprend :
• un premier stade pendant lequel le milieu réactionnel est agité à une température allant de 220 à 310°C afin de former des oligomères, avantageusement de 245 à 275°C ;
• un second stade pendant lequel les oligomères formés sont agités sous vide à une température allant de 240 à 330°C afin de former le polyester, avantageusement de 255 à 275°C.

6. Procédé selon l'une quelconque des revendications 1 à 5, **caractérisé en ce que** le système catalytique est introduit dans le réacteur avant l'étape de polymérisation.

7. Procédé de fabrication selon l'une quelconque des revendications 1 à 6, **caractérisé en ce que** le système catalytique est choisi de manière à ce que le ratio élémentaire molaire Ge : Al aille de 0,05 : 1 à 500 : 1, avantageusement de 0,2 à 300 :1, de préférence de 0,33 : 1 à 1,25 : 1.

8. Procédé de fabrication selon l'une quelconque des revendications 1 à 7, **caractérisé en ce que** le système catalytique comprend en outre un catalyseur additionnel comprenant l'élément cobalt ou au moins un des catalyseurs comprenant l'élément germanium et/ou l'élément aluminium comprend en outre l'élément cobalt.

9. Procédé de fabrication selon l'une quelconque des revendications 1 à 8, **caractérisé en ce que** la quantité massique totale de métal compris dans le système catalytique, rapportée à la quantité massique totale de polymère obtenu, va de 50 à 500 ppm.

10. Procédé selon l'une quelconque des revendications 1 à 9, **caractérisé en ce que** une étape de désoxygénation du réacteur est réalisée préalablement à l'étape de polymérisation des monomères, avantageusement en plaçant le réacteur sous atmosphère d'un gaz inerte tel que l'azote, par exemple en réalisant au moins une fois une séquence d'un stade de vide dans le réacteur suivi d'un stade d'introduction d'un gaz inerte dans le réacteur.

11. Procédé selon l'une quelconque des revendications 1 à 10, **caractérisé en ce que** le pourcentage molaire de monomère (A) par rapport au nombre total de moles de monomères (A), (B) et le cas échéant (C) va de 25 à 50%, de préférence de 33 à 49%, tout préférentiellement de 40 à 48%.

12. Procédé selon l'une quelconque des revendications 1 à 11, **caractérisé en ce que** le 1,4 : 3,6-dianhydrohexitol est l'isosorbide.

13. Composition de polyester comprenant :
- un polyester contenant au moins un motif 1,4 : 3,6-dianhydrohexitol et comprenant au moins un monomère (A) qui est un diacide ou un diester et
- un système catalytique comprenant soit un catalyseur comprenant l'élément germanium et un catalyseur comprenant l'élément aluminium, soit un catalyseur comprenant les éléments germanium et aluminium ou soit un mélange de ces catalyseurs.

14. Composition de polyester selon la revendication 13, **caractérisée en ce qu'**elle présente une clarté L* supérieure à 45, de préférence supérieure à 55, le paramètre L* étant déterminé à l'aide d'un spectrophotomètre en utilisant le modèle CIE Lab.

15. Composition de polyester selon la revendication 13 ou 14, **caractérisée en ce qu'**elle présente une coloration b* entre - 10 et 10, de préférence entre - 6 et 6, le paramètre b* étant déterminé à l'aide d'un spectrophotomètre en utilisant le modèle CIE Lab.

16. Composition de polyester selon l'une quelconque des revendications 13 à 15, **caractérisée en ce qu'**elle présente une viscosité réduite supérieure à 35 mL/g, de préférence supérieure à 50 mL/g, la viscosité réduite étant évaluée à l'aide d'un viscosimètre capillaire Ubbelohlde à 25°C dans un mélange équimassique de phénol et d'ortho-dichlorobenzène après dissolution du polymère à 130°C sous agitation, la concentration de polymère étant de 5g/L.

17. Article comprenant la composition de polyester selon l'une quelconque des revendications 13 à 16.

18. Utilisation d'un système catalytique comprenant un catalyseur comprenant l'élément germanium et un catalyseur comprenant l'élément aluminium, d'un catalyseur comprenant les éléments germanium et aluminium ou d'un mélange de ces catalyseurs pour réduire la coloration d'un polyester contenant au moins un motif 1,4 : 3,6-dianhydrohexitol.

## Patentansprüche

1. Verfahren zur Herstellung eines Polyesters, der wenigstens eine 1,4 : 3,6-Dianhydrohexitol-Einheit enthält, umfassend wenigstens:
• einen Schritt des Einführens von Monomeren in einen Reaktor, die wenigstens ein Monomer (A), das eine Disäure oder ein Diester ist, und wenigstens ein Monomer (B), das ein 1,4 : 3,6-Dianhydrohexitol ist, umfassen;
• einen Schritt des Einführens eines Katalysatorsystems in den Reaktor, das entweder einen Katalysator, der das Element Germanium umfasst, und einen Katalysator, der das Element Aluminium umfasst, oder einen Katalysator, der die Elemente Germanium und Aluminium umfasst, oder eine Mischung dieser Katalysatoren umfasst;
• einen Schritt der Polymerisation der Monomere zur Bildung des Polyesters;
• einen Schritt der Gewinnung einer Polyesterzusammensetzung, die den Polyester und das Katalysatorsystem umfasst.

2. Herstellungsverfahren nach Anspruch 1, **dadurch gekennzeichnet, dass** das Monomer (A) ein aromatisches Monomer ist, bevorzugt gewählt aus Terephthalsäure, Isophthalsäure, Phthalsäure, 2,6-Naphthalindicarboxylsäure, 1,4-Naphthalindicarbonsäure, Furandicarbonsäure, einer Mischung dieser Disäuren, einem Diester dieser Disäuren und einer Mischung dieser Diester.

3. Herstellungsverfahren nach Anspruch 2, **dadurch gekennzeichnet, dass** das Monomer (A) Terephthalsäure oder ein Diester der Terephthalsäure ist.

4. Herstellungsverfahren nach einem der Ansprüche 1 bis 3, **dadurch gekennzeichnet, dass** die Monomere ferner wenigstens ein Diol (C) umfassen, das von 1,4 : 3,6-Dianhydrohexitolen verschieden ist, insbesondere ein Diol, das aus aliphatischen Diolen gewählt ist, bevorzugt eines, das gewählt ist aus Ethylenglykol, 1,3-Propandiol, 1,4-Butandiol 1,5-Pentandiol, 1,6-Hexandiol, 1,8-Octandiol, 1,10-Decandiol, 1,4-Cyclohexandimethanol, 1,2-Cyclohexandimethanol, 1,3-Cyclohexandimethanol und ein Gemisch dieser Diole, stark bevorzugt Ethylenglykol, 1,4-Butandiol, 1,4-Cyclohexandimethanol und einem Gemisch dieser Diole, besonders bevorzugt Ethylenglykol, 1,4-Cyclohexandimethanol und einem Gemisch dieser Diole.

5. Herstellungsverfahren nach einem der Ansprüche 1 bis 4, **dadurch gekennzeichnet, dass** der Schritt der Polymerisation der Monomere umfasst:
- eine erste Stufe, während der das Reaktionsmedium bei einer Temperatur von 220 bis 310 °C gerührt wird, um Oligomere zu bilden, vorteilhafterweise von 245 bis 275 °C;
- eine zweite Stufe, während der die gebildeten Oligomere unter Vakuum bei einer Temperatur von 240 bis 330 °C gerührt werden, um den Polyester zu bilden, vorteilhafterweise von 255 bis 275 °C.

6. Verfahren nach einem der Ansprüche 1 bis 5, **dadurch gekennzeichnet, dass** das Katalysatorsystem vor dem Polymerisationsschritt in den Reaktor eingeführt wird.

7. Herstellungsverfahren nach einem der Ansprüche 1 bis 6, **dadurch gekennzeichnet, dass** das Katalysatorsystem so gewählt wird, dass das molare Elementarverhältnis Ge : Al von 0,05:1 bis 500:1, vorteilhafterweise von 0,2 bis 300:1, bevorzugt von 0,33:1 bis 1,25:1 reicht.

8. Verfahren zur Herstellung nach einem der Ansprüche 1 bis 7, **dadurch gekennzeichnet, dass** das Katalysatorsystem ferner einen zusätzlichen Katalysator umfasst, der das Element Kobalt enthält, oder wenigstens einer der Katalysatoren das Element Germanium enthält und/oder das Element Aluminium zusätzlich das Element Kobalt enthält.

9. Herstellungsverfahren nach einem der Ansprüche 1 bis 8, **dadurch gekennzeichnet, dass** die Gesamtmassenmenge des im Katalysatorsystem enthaltenen Metalls, bezogen auf die Gesamtmassenmenge des erhaltenen Polymers, im Bereich von 50 bis 500 ppm liegt.

10. Verfahren nach einem der Ansprüche 1 bis 9, **dadurch gekennzeichnet, dass** vor dem Schritt der Polymerisation der Monomere ein Schritt der Desoxygenierung des Reaktors durchgeführt wird, vorteilhafterweise, indem der Reaktor unter die Atmosphäre eines Inertgases wie Stickstoff gebracht wird, z. B. indem wenigstens einmal eine Sequenz aus einer Vakuumstufe im Reaktor und einer anschließenden Stufe der Einführung eines Inertgases in den Reaktor durchgeführt wird.

11. Verfahren nach einem der Ansprüche 1 bis 10, **dadurch gekennzeichnet, dass** der Molprozentsatz des Monomers (A), bezogen auf die Gesamtmolzahl der Monomere (A), (B) und gegebenenfalls (C), 25 bis 50 %, bevorzugt 33 bis 49 %, besonders bevorzugt 40 bis 48 %, beträgt.

12. Verfahren nach einem der Ansprüche 1 bis 11, **dadurch gekennzeichnet, dass** es sich bei dem 1,4 : 3,6-Dianhydrohexitol um Isosorbid handelt.

13. Polyesterzusammensetzung, umfassend:
- einen Polyester, der wenigstens eine 1,4 : 3,6-Dianhydrohexitol-Einheit enthält und wenigstens ein Monomer (A) umfasst, das eine Disäure oder ein Diester ist, und
- ein Katalysatorsystem, das entweder einen Katalysator, der das Element Germanium umfasst, und einen Katalysator, der das Element Aluminium umfasst, oder einen Katalysator, der die Elemente Germanium und Aluminium umfasst, oder eine Mischung dieser Katalysatoren umfasst.

14. Polyesterzusammensetzung nach Anspruch 13, **dadurch gekennzeichnet, dass** sie eine Klarheit L* von mehr als 45, bevorzugt mehr als 55, aufweist, wobei der Parameter L* mit einem Spektralphotometer unter Verwendung des CIE-Lab-Modells bestimmt wird.

15. Polyesterzusammensetzung nach Anspruch 13 oder 14, **dadurch gekennzeichnet, dass** sie eine b^{∗}-Färbung zwischen -10 und 10, bevorzugt zwischen -6 und 6 aufweist, wobei der Parameter b^{∗} mithilfe eines Spektralphotometers unter Verwendung des CIE-Lab-Modells bestimmt wird.

16. Polyesterzusammensetzung nach einem der Ansprüche 13 bis 15, **dadurch gekennzeichnet, dass** sie eine reduzierte Viskosität von mehr als 35 ml/g, bevorzugt mehr als 50 ml/g aufweist, wobei die reduzierte Viskosität mit einem Ubbelohlde-Kapillarviskosimeter bei 25 °C in einer äquimassigen Mischung aus Phenol und ortho-Dichlorbenzol nach dem Auflösen des Polymers bei 130 °C unter Rühren bestimmt wird und die Polymerkonzentration 5 g/l beträgt.

17. Artikel, der die Polyesterzusammensetzung nach einem der Ansprüche 13 bis 16 enthält.

18. Verwendung eines Katalysatorsystems, umfassend einen Katalysator, der das Element Germanium umfasst, und einen Katalysator, der das Element Aluminium umfasst, einen Katalysator, der die Elemente Germanium und Aluminium umfasst, oder eine Mischung dieser Katalysatoren umfasst, zur Verringerung der Verfärbung eines Polyesters, der wenigstens eine 1,4 : 3,6-Dianhydrohexitol-Einheit enthält.

## Claims

1. A process for manufacturing a polyester containing at least one 1,4:3,6-dianhydrohexitol unit, comprising at least:
• a step of introducing into a reactor monomers comprising at least one monomer (A) which is a diacid or a diester and at least one monomer (B) which is a 1,4:3,6-dianhydrohexitol;
• a step of introducing into the reactor a catalytic system comprising either a catalyst comprising the element germanium and a catalyst comprising the element aluminum, or a catalyst comprising the elements germanium and aluminum, or a mixture of these catalysts;
• a step of polymerizing said monomers to form the polyester;
• a step of recovering a polyester composition comprising the polyester and the catalytic system.

2. The manufacturing process as claimed in claim 1, **characterized in that** the monomer (A) is an aromatic monomer, preferentially chosen from terephthalic acid, isophthalic acid, phthalic acid, 2,6-naphthalenedicarboxylic acid, 1,4-naphthalenedicarboxylic acid, a furandicarboxylic acid, a mixture of these diacids, a diester of these diacids and a mixture of these diesters.

3. The manufacturing process as claimed in claim 2, **characterized in that** the monomer (A) is terephthalic acid or a terephthalic acid diester.

4. The manufacturing process as claimed in any one of claims 1 to 3, **characterized in that** said monomers also comprise at least one diol (C), other than 1,4:3,6-dianhydrohexitol, especially a diol chosen from aliphatic diols, preferentially one chosen from ethylene glycol, 1,3-propanediol, 1,4-butanediol, 1,5-pentanediol, 1,6-hexanediol, 1,8-octanediol, 1,10-decanediol, 1,4-cyclohexanedimethanol, 1,2-cyclohexanedimethanol, 1,3-cyclohexanedimethanol and a mixture of these diols, very preferentially ethylene glycol, 1,4-butanediol, 1,4-cyclohexanedimethanol and a mixture of these diols, most preferably ethylene glycol, 1,4-cyclohexanedimethanol and a mixture of these diols.

5. The manufacturing process as claimed in any one of claims 1 to 4, **characterized in that** the step of polymerization of said monomers comprises:
• a first stage during which the reaction medium is stirred at a temperature ranging from 220 to 310°C so as to form oligomers, advantageously from 245 to 275°C;
• a second stage during which the oligomers formed are stirred under vacuum, at a temperature ranging from 240 to 330°C so as to form the polyester, advantageously from 255 to 275°C.

6. The process as claimed in any one of claims 1 to 5, **characterized in that** the catalytic system is introduced into the reactor before the polymerization step.

7. The manufacturing process as claimed in any one of claims 1 to 6, **characterized in that** the catalytic system is chosen so that the elemental mole ratio Ge:AI ranges from 0.05:1 to 500:1, advantageously from 0.2 to 300:1, preferably from 0.33:1 to 1.25:1.

8. The manufacturing process as claimed in any one of claims 1 to 7, **characterized in that** the catalytic system also comprises an additional catalyst comprising the element cobalt, or at least one of the catalysts comprising the element germanium and/or the element aluminum also comprises the element cobalt.

9. The manufacturing process as claimed in any one of claims 1 to 8, **characterized in that** the total mass amount of metal included in the catalytic system, relative to the total mass amount of polymer obtained, ranges from 50 to 500 ppm.

10. The process as claimed in any one of claims 1 to 9, **characterized in that** a step of deoxygenation of the reactor is performed prior to the monomer polymerization step, advantageously by placing the reactor under an atmosphere of an inert gas such as nitrogen, for example by performing at least once a sequence of a stage of vacuum in the reactor followed by a stage of introducing an inert gas into the reactor.

11. The process as claimed in any one of claims 1 to 10, **characterized in that** the molar percentage of monomer (A) relative to the total number of moles of monomers (A), (B) and, where appropriate, (C) ranges from 25% to 50%, preferably from 33% to 49% and most preferentially from 40% to 48%.

12. The process as claimed in any one of claims 1 to 11, **characterized in that** the 1,4:3,6-dianhydrohexitol is isosorbide.

13. A polyester composition comprising:
- a polyester containing at least one 1,4:3,6-dianhydrohexitol unit and comprising at least one monomer (A) which is a diacid or a diester and
- a catalytic system comprising either a catalyst comprising the element germanium and a catalyst comprising the element aluminum, or a catalyst comprising the elements germanium and aluminum, or a mixture of these catalysts.

14. The polyester composition as claimed in claim 13, **characterized in that** it has a lightness L* of greater than 45, preferably greater than 55, the parameter L* being determined using a spectrophotometer, via the CIE Lab model.

15. The polyester composition as claimed in claim 13 or 14, **characterized in that** it has a coloring b* of between -10 and 10, preferably between -6 and 6, the parameter b* being determined using a spectrophotometer, via the CIE Lab model.

16. The polyester composition as claimed in any one of claims 13 to 15, **characterized in that** it has a reduced viscosity of greater than 35 mL/g, preferably greater than 50 mL/g, the reduced viscosity being evaluated using an Ubbelohde capillary viscometer at 25°C in an equi-mass mixture of phenol and ortho-dichlorobenzene after dissolving the polymer at 130°C with stirring, the polymer concentration being of 5 g/L.

17. An article comprising the polyester composition as claimed in any one of claims 13 to 16.

18. The use of a catalytic system comprising a catalyst comprising the element germanium and a catalyst comprising the element aluminum, of a catalyst comprising the elements germanium and aluminum or of a mixture of these catalysts, for reducing the coloring of a polyester containing at least one 1,4:3,6-dianhydrohexitol unit.
